# EUROPÄISCHE PATENTSCHRIFT

(11) **EP 1 700 053 B1**
(45) Veröffentlichungstag und Bekanntmachung des Hinweises auf die Patenterteilung: **05.03.2008**
(21) Anmeldenummer: 04804540.5
(22) Anmeldetag: 17.11.2004
(51) Int. Cl.: F16D 65/14

(54) **SELBSTVERSTÄRKENDE ELEKTROMECHANISCHE REIBUNGSBREMSE**
SELF-BOOSTING ELECTROMECHANICAL FRICTION BRAKE
FREIN A FRICTION ELECTROMECANIQUE A AUTO-AMPLIFICATION

(30) Priorität: 24.12.2003 DE 10361264
(43) Veröffentlichungstag der Anmeldung: 13.09.2006
(73) Patentinhaber: ROBERT BOSCH GMBH, 70442 Stuttgart (DE)
(72) Erfinder: BAUMANN, Dietmar, 71282 Hemmingen (DE); HOFMANN, Dirk, 71636 Ludwigsburg (DE); VOLLERT, Herbert, 71665 Vaihingen/Enz (DE); NAGEL, Willi, 71686 Remseck/Hochdorf (DE); HENKE, Andreas, 34474 Diemelstadt (DE); FOITZIK, Bertram, 71636 Ludwigsburg (DE); GOETZELMANN, Bernd, 71696 Moeglingen (DE)
(86) Internationale Anmeldenummer: PCT/EP2004/052994
(87) Internationale Veröffentlichungsnummer: WO 2005/064195

(56) Entgegenhaltungen:
- WO-A-03/056204
- WO-A-03/071150
- US-A- 3 185 258
- US-A- 5 219 048

## Beschreibung

### Stand der Technik

Die Erfindung betrifft eine selbstverstärkende elektromechanische Reibungsbremse mit den Merkmalen des Oberbegriffs des Anspruchs 1.

Eine derartige Reibungsbremse ist bekannt aus der WO 03/071150 A1 oder der WO 03/056204 A1. Die bekannte Reibungsbremse ist als Scheibenbremse ausgebildet. Sie weist einen Reibbremsbelag auf, der zum Bremsen mit einer elektromechanischen Betätigungseinrichtung an einen zu bremsenden Bremskörper drückbar ist, wobei im Falle einer Scheibenbremse der Bremskörper eine Bremsscheibe ist. Die elektromechanische Betätigungseinrichtung der bekannten Reibungsbremse weist einen Elektromotor, ein Untersetzungsgetriebe und ein Schraubgetriebe als Rotations/Translations-Umsetzungsgetriebe auf. Mit der Betätigungseinrichtung ist der Reibbremsbelag quer oder in einem Winkel schräg zur Bremsscheibe bewegbar und damit an diese drückbar. Der Aufbau der elektromechanischen Betätigungseinrichtung kann vom geschilderten Aufbau abweichen.

Zur Erzielung einer Selbstverstärkung weist die bekannte Reibungsbremse einen Rampenmechanismus mit einer in einem Winkel zur Bremsscheibe verlaufenden Rampe auf, an der sich der Reibbremsbelag beim Andrücken an die Bremsscheibe abstützt. Wird der Reibbremsbelag beim Bremsen an die drehende Bremsscheibe gedrückt, übt die Bremsscheibe eine Reibungskraft auf den Reibbremsbelag aus, die den Reibbremsbelag in Richtung eines enger werdenden, keilförmigen Spalts zwischen der den Reibbremsbelag abstützenden Rampe und der Bremsscheibe beaufschlagt. Die Abstützung des Reibbremsbelags an der schräg zur Bremsscheibe verlaufenden Rampe des Rampenmechanismus bewirkt eine Kraft auf den Reibbremsbelag mit einer Kraftkomponente quer zur Bremsscheibe. Diese Kraftkomponente quer zur Bremsscheibe ist eine Andruckkraft, die den Reibbremsbelag an die Bremsscheibe drückt. Die vom Rampenmechanismus bewirkte Andruckkraft erhöht eine von der elektromechanischen Betätigungseinrichtung bewirkte Andruckkraft und erhöht damit eine Bremskraft der Reibungsbremse. Die Erhöhung von Andruck und Bremskraft wird als Selbstverstärkung bezeichnet.

Ein Winkel, unter dem die Rampe des Rampenmechanismus zur Bremsscheibe verläuft, kann sich im Verlauf der Rampe ändern. Ein Sonder- oder Grenzfall eines Rampenmechanismus ist ein Keilmechanismus, bei dem der Winkel, unter dem die Rampe zur Bremsscheibe verläuft, über den Verlauf der Rampe konstant ist. Die Rampe wird in diesem Fall als Keil bezeichnet. Es können mehrere Rampenmechanismen vorgesehen sein, die auf einer der Bremsscheibe abgewandten Rückseite des Reibbremsbelags verteilt angeordnet sind und die den Reibbremsbelag gemeinsam abstützen.

Bei der bekannten Reibungsbremse sind Kugeln oder Rollen als Wälzkörper vorgesehen, über die sich der Reibbremsbelag an der Rampe abstützt und die eine Reibung beim Verschieben des Reibbremsbelags entlang der Rampe mindern. Die Wälzkörper der bekannten Reibungsbremse wälzen auf Laufbahnen, die auf einer der Bremsscheibe abgewandten Rückseite des Reibbremsbelags und an einer dem Reibbremsbelag zugewandten Widerlagerplatte angebracht sind. Die Laufbahnen erstrecken sich in Verschiebrichtung des Reibbremsbelags und sind in ihrer Längsmitte am tiefsten, ihre Tiefe nimmt von der Längsmitte aus in beiden Richtungen ab. Dadurch bilden die Laufbahnen die Rampe bzw. Rampen des Rampenmechanismus. Die Laufbahnen sind vertieft in der Rückseite des Reibbremsbelags und in der Widedagerplatte angebracht, sie führen die Wälzkörper und über die Wälzkörper den Reibbremsbelag quer zur Verschieberichtung.

Die selbstverstärkende elektromechanische Reibungsbremse ist vorstehend anhand einer Scheibenbremse beschrieben worden, weil sie sich anhand einer Scheibenbremse anschaulich erläutern lässt, weil ein überwiegender Teil bekannter derartiger Reibungsbremsen als Scheibenbremsen ausgeführt sind und weil auch die als Stand der Technik genannte Reibungsbremse eine Scheibenbremse ist. Dadurch soll die Verwirklichung der Erfindung an anderen Bremsenbautypen nicht ausgeschlossen werden.

Wird der Reibbremsbelag der bekannten Reibungsbremse zum Bremsen und Lösen der Bremse hin- und hergeschoben, wälzen die Wälzkörper idealerweise auf den Laufbahnen ab und befinden sich in ihrer ursprünglichen Position, wenn sich auch der Reibbremsbelag wieder in seiner ursprünglichen Position befindet. Dies gilt strenggenommen nur bei Vernachlässigung von Bremsbelagverschleiß oder bei einer Reibungsbremse mit einer Verschleißnachstellung. Es lässt sich jedoch nicht ausschließen, dass die Wälzkörper auf ihren Laufbahnen nicht nur wälzen, sondern auch gleiten, wenn der Reibbremsbelag hin- und hergeschoben wird. In diesem Fall gelangen die Wälzkörper nicht mehr In ihre Ausgangslage zurück. Bei vielfachem Hin- und Herschieben des Reibbremsbelags können die Wälzkörper immer weiter von ihrer Ausgangslage "wegwandern".

### Erläuterung und Vorteil der Erfindung

Die erfindungsgemäße Reibungsbremse mit den Merkmalen des Anspruchs 1 weist eine Zwangssteuerung für die Wälzkörper auf, die ein Gleiten der Wälzkörper auf den Laufbahnen verhindert oder zumindest so begrenzt, dass die Wälzkörper ihre Laufbahnen nicht verlassen.. Die Erfindung verhindert, dass sich die Wälzkörper beliebig weit von ihrer Ausgangslage entfernen können und bewirkt vorzugsweise, dass die Wälzkörper in ihre Ausgangslage zurückkehren, wenn der Reibbremsbelag in seine Ausgangslage zurückverschoben wird. Ein all mähliches "Wandern" der Wälzkörper zu den Enden ihrer Laufbahnen oder aus den Laufbahnen heraus bei vielmaliger Betätigung der Reibungsbremse wird vermieden.

Die Unteransprüche haben vorteilhafte Ausgestaltungen und Weiterbildungen der im Anspruch 1 angegebenen Erfindung zum Gegenstand.

Als einfache Möglichkeit einer Zwangssteuerung sieht Anspruch 2 einen Endanschlag für die Wälzkörper vor, der einen Weg der Wälzkörper beschränkt. Diese Ausgestaltung der Erfindung eignet sich insbesondere für Reibungsbremsen mit Selbstverstärkung in nur einer Drehrichtung des Bremskörpers. Hier lässt sich der Endanschlag bzw. lassen sich zwei Endanschläge am Ende der Laufbahn bzw. Laufbahnen anbringen, so dass der Wälzkörper zwingend in seine Ausgangslage zurückbewegt wird, wenn der Reibbremsbelag in seine Ausgangslage zurückgeschoben wird. Der Wälzkörper nimmt dadurch zwingend am Beginn jeder Bremsbetätigung seine Ausgangslage ein. Vorteil ist, dass die Reibungsbremse gelöst ist, wenn der Wälzkörper vom Endanschlag in seine Ausgangslage zurückbewegt wird. Es wirken also keine oder allenfalls geringe Andruckkräfte, die ein Gleiten des Wälzkörpers auf den Laufbahnen zum Rückstellen in die Ausgangslage erschweren. Allerdings lässt sich ein Endanschlag auch an anderer Stelle, beispielsweise einem anderen Ende der Laufbahn des Wälzkörpers anordnen. Ein Bremsen ist selbstverständlich auch bei umgekehrter Drehrichtung des Bremskörpers möglich, allerdings ohne Selbstverstärkung oder sogar selbstschwächend. Der Endanschlag muss nicht direkt mit dem Wälzkörper in Kontakt kommen, er kann beispielsweise auch mit einem Wälzkörperkäfig zusammenwirken.

Anspruch 4 sieht eine zwangsweise Bewegung der Wälzkörper mit der Verschiebung des Reibbremsbelags bei Betätigung der Reibungsbremse vor. Die Wälzkörper werden also beispielsweise mit halber Geschwindigkeit und um den halben Weg wie der Reibbremsbelag bewegt wie es bei einer reinen Wälzbewegung ohne Gleiten der Fall ist. Die jeweilige Position der Wälzkörper ist bei dieser Ausgestaltung der Erfindung zwingend und eindeutig durch die Position des Reibbremsbelags bestimmt.

Eine Möglichkeit einer solchen Zwangssteuerung ist gemäß Anspruch 5 ein Zahnrad am Wälzkörper vorzusehen, das mit einer Zahnstange am Reibbremsbelag und/oder an der Rampe kämmt.

Anspruch 7 sieht einen Wälzkörperkäfig vor, der alle oder einen Teil der Wälzkörper der Reibungsbremse in ihrem Abstand voneinander hält. Der Wälzkörperkäfig, der die gleiche Funktion wie ein Kugelkäfig eines Kugellagers hat, bewegt die Wälzkörper zwangsweise miteinander und verhindert eine Verschiebung eines oder einzelner Wälzkörper gegenüber den anderen Wälzkörpern. Es genügt in diesem Fall eine Zwangssteuerung eines Wälzkörpers für alle mit dem Wälzkörperkäfig verbundenen Wälzkörper.

Die Zwangssteuerung kann an einem oder mehreren Wälzkörpern unmittelbar angreifen. Anspruch 8 ist auf die Möglichkeit gerichtet, dass die Zwangssteuerung am Wälzkörperkäfig angreift und über diesen die Wälzkörper mittelbar zwangsweise bewegt. Es ist beispielsweise das mit der Zahnstange kämmende Zahnrad am Wälzkörperkäfg angebracht.

Anspruch 9 sieht vor, dass mindestens ein Wälzkörper den Reibbremsbelag quer zu seiner Verschieberichtung statisch bestimmt führt. Dabei ist mit quer zur Verschieberichtung eine Führung des Reibbremsbelags in einer zu einer Bremsscheibe parallelen Ebene oder radial zu einer Drehachse der Bremsscheibe gemeint. Diese Ausgestaltung vermeidet ein Spiel des Reibbremsbelags quer zu seiner Verschieberichtung, in einer zur Bremsscheibe parallelen Ebene. Ebenso wird eine statische Überbestimmtheit der Lagerung und Führung des Reibbremsbelags quer zu seiner Verschieberichtung vermieden, die aufgrund von Herstellungstoleranzen zu mechanischen Spannungen und erhöhtem Verschleiß führen kann. Diese Ausgestaltung der Erfindung hat den Vorteil, dass sie geringe Anforderungen an Herstellungstoleranzen erfordert.

Eine Weiterbildung gemäß Anspruch 10 sieht vor, dass zwei Wälzkörper den Reibbremsbelag quer zu seiner Verschieberichtung statisch bestimmt führen. Dadurch wird zusätzlich zur spielfreien Führung des Reibbremsbelags quer zu seiner Verschieberichtung eine Drehung des Reibbremsbelags um eine gedachte, den Reibbremsbelag senkrecht durchsetzende Achse, verhindert. Ein dritter und eventuelle weitere Wälzkörper weisen keine Führungsfunktion für den Reibbremsbelag quer zu seiner Verschieberichtung auf, um eine statische Überbestimmtheit der Querführung des Reibbremsbelags, also radial zu einer Bremsscheibe, zu vermeiden.

Sofern die den Wälzkörper quer zu seiner Verschieberichtung statisch bestimmt führenden Wälzkörper Kugeln sind sieht Anspruch 10 eine Vierpunktlagerung des Reibbremsbelags mit den Kugeln vor. Damit ist gemeint, dass die Kugeln in jeder Kugelrinne, in der sie einliegen, an zwei Punkten beidseitig einer gedachten Längsmittellinie der Kugelrinne an der Kugelrinne anliegen. Die Kugeln liegen also an insgesamt vier Punkten in den beiden Kugelrinnen an. Die gewünschte Zweipunktanlage in jeder Kugelrinne lässt sich durch eine von einer Kreisform abweichende Rundung der Kugelrinne oder beispielsweise auch durch eine Prismenform der Kugelrinnen erreichen.

Werden als Wälzkörper zylindrische oder kegelförmige Rollen verwendet, werden diese gemäß Anspruch 12 mit einer Neigung quer zur Verschieberichtung des Reibbremsbelags angeordnet, um die gewünschte statisch bestimmte Führung des Reibbremsbelags quer zu seiner Verschieberichtung zu bewirken.

Die in Ansprüchen 9 bis 12 angegebenen Ausgestaltungen der Erfindung können gemeinsam oder unabhängig von der in Ansprüchen 1 bis 8 angegebenen Zwangssteuerung der Wälzkörper an einer erfindungsgemäßen Reibungsbremse verwirklicht sein.

### Zeichnung

Die Erfindung wird nachfolgend anhand in der Zeichnung dargestellter Ausführungsbeispiele näher erläutert. Es zeigen:
- Figur 1: eine schematisierte, perspektivische Darstellung einer selbstverstärkenden elektromechanischen Reibungsbremse;
- Figuren 2 bis 8: unterschiedliche Ausgestaltungsmöglichkeiten von Wälzlagerungen eines Reibbremsbelags der Reibungsbremse aus Figur 1 gemäß der Erfindung.

Die Zeichnungen sind als schematisierte und vereinfachte Darstellungen zu verstehen.

### Beschreibung des Ausführungsbeispiels

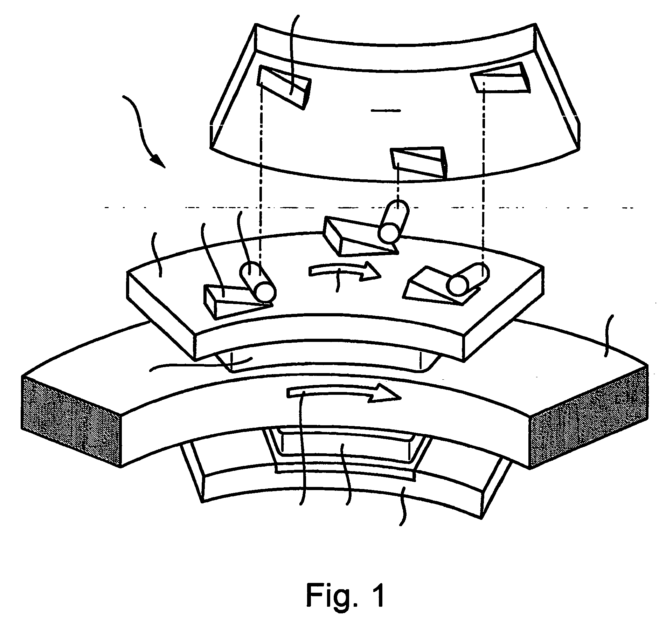

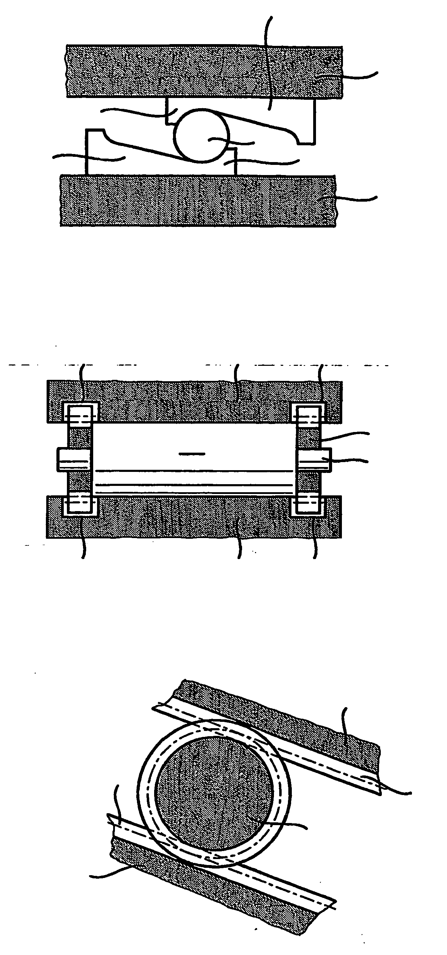

Figur 1 zeigt schematisch eine selbstverstärkende elektromechanische Reibungsbremse 10, die als Scheibenbremse ausgeführt ist. Die Reibungsbremse 10 weist zwei Reibbremsbeläge 12, 14 auf, die beiderseits einer Bremsscheibe 16 angeordnet sind. Einer der beiden Reibbremsbeläge 12 liegt fest, d. h. unbeweglich in einem Bremssattel 18 ein. Dieser Reibbremsbelag 12 wird nachfolgend als fester Reibbremsbelag 12 bezeichnet werden. Vom Bremssattel 18 ist nur ein in der Zeichnung unterhalb der Bremsscheibe 16 befindlicher Teil dargestellt, weil ein oberhalb der Bremsscheibe 16 befindlicher Teil des Bremssattels 18 die wesentlichen Teile der Reibungsbremse 10 verdecken würde. Der Bremssattel 18 übergreift wie üblich die Bremsscheibe 16 außerhalb ihres Umfangs.

Der andere Reibbremsbelag 14 ist in einer Drehrichtung und quer zur Bremsscheibe 16 beweglich. In Drehrichtung der Bremsscheibe 16 bedeutet, dass der bewegliche Reibbremsbelag 14 um eine gedachte Achse drehbar ist, die zumindest näherungsweise mit einer Drehachse der Bremsscheibe 16 zusammen fällt. Grundsätzlich ist auch eine Verschiebbarkeit des beweglichen Reibbremsbelags 14 in einer Tangenten- oder Sekantenrichtung zur Bremsscheibe 16 möglich. Die Bewegung des Reibbremsbelags 14 zur Betätigung der Reibungsbremse 10 erfolgt mit einer elektromechanischen Betätigungseinrichtung, die der klaren Darstellung wegen nicht gezeichnet ist. Derartige Betätigungseinrichtungen sind dem Fachmann in unterschiedlichen Konstruktionen aus dem Stand der Technik bekannt und sollen, da sie nicht den eigentlichen Gegenstand der Erfindung bilden, hier nicht näher erläutert werden.

Der Reibbremsbelag 14 ist wie üblich fest und unlösbar mit einer Bremsbelagträgerplatte 20 verbunden, die auf ihrer der Bremsscheibe 16 abgewandten Rückseite Rampen 22 aufweist, die in Drehrichtung der Bremsscheibe 16, also in Verschieberichtung des Reibbremsbelags 14, verlaufen. Auf einer der Bremsscheibe 16 zugewandten Vorderseite einer Widerlagerplatte 24 sind zu den Rampen 22 der Bremsbelagträgerplatte 20 komplementäre Rampen 26 angeordnet, an denen sich die Rampen 22 des Reibbremsbelags 14 über Wälzkörper 28 abstützen. Die Wälzkörper 28 sind zwischen den Rampen 22 des Reibbremsbelags 14 und den Rampen 26 der Widerlagerplatte 24 angeordnet, die Wälzkörper 28 wälzen auf den Rampen 22, 26. Die Wälzkörper 28 dienen einer Reibungsminderung. In Figur 1 sind die Wälzkörper Zylinderrollen, es können allerdings auch Kegelrollen, Kugeln oder sonstige Wälzkörper Verwendung finden.

Die Widerlagerplatte 24 ist in etwa deckungsgleich mit der Bremsbelagträgerplatte 20 auf deren der Bremsscheibe 16 abgewandter Rückseite angeordnet. In Figur 1 ist die Widerlagerplatte 24 nach oben geklappt dargestellt um die Rampen 22, 26 und die Wälzkörper 28 sichtbar zu machen. Tatsächlich ist die Widerlagerplatte 24 parallel zu den Reibbremsbelägen 12, 14, der Bremsscheibe 16 und der Bremsbelagträgerplatte 20 angeordnet. Die Widerlagerplatte 24 ist fest, d. h. unbeweglich in dem nicht dargestellten, die Bremsbelagträgerplatte 20 auf ihrer der Bremsscheibe 16 abgewandten Rückseite übergreifenden Teil des Bremssattels 18 angeordnet. Dieser nicht dargestellte Teil des Bremssattels 18 befindet sich in Figur 1 oberhalb der Bremsscheibe 16 und oberhalb der Bremsbelagträgerplatte 20. Der Bremssattel 18 ist als sog. Schwimmsattel ausgeführt, d. h. er ist quer zur Bremsscheibe 16 verschieblich. Beim Drücken des beweglichen Reibbremsbelags 14 an die Bremsscheibe 16 wird der Bremssattel 18 quer zur Bremsscheibe 16 verschoben und drückt den festen Reibbremsbelag 12 an die andere Seite der Bremsscheibe 16, so dass die Bremsscheibe 16 von beiden Reibbremsbelägen 12, 14 gebremst wird.

Zum Betätigen der Reibungsbremse 10 wird der bewegliche Reibbremsbelag 14 in Drehrichtung der Bremsscheibe 16 verschoben. Die Drehrichtung der Bremsscheibe 16 ist in Figur 1 mit dem Pfeil 30 und die Verschieberichtung des Reibbremsbelags 14 mit dem Pfeil 32 auf der Bremsbelagträgerplatte 20 dargestellt. Bei der Bewegung des Reibbremsbelags 14 in Drehrichtung 30 der Bremsscheibe 16 wälzen die Wälzkörper 28 auf den Rampen 22, 26. Aufgrund des Anstiegs der Rampen 22, 26 wird der Reibbremsbelag 14 bei der Bewegung in Drehrichtung der Bremsscheibe 16 quer auf die Bremsscheibe 16 zubewegt und an diese gedrückt. Die Bremsscheibe 16 wird gebremst. Die drehende Bremsscheibe 16 übt eine Reibungskraft in Drehrichtung auf den an sie gedrückten Reibbremsbelag 14 aus, die den Reibbremsbelag 14 in Drehrichtung 30 der Bremsscheibe 16 und damit in seiner Bewegungsrichtung 32 beaufschlagt. Über die Abstützung an den Rampen 22, 26 bewirkt die Beaufschlagung des Reibbremsbelags 14 mit der Reibungskraft in Drehrichtung 30 der Bremsscheibe 16 eine Stützkraft mit einer Komponente quer zur Bremsscheibe 16. Diese Kraftkomponente quer zur Bremsscheibe 16 bildet eine Andruckkraft, die den Reibbremsbelag 14 zusätzlich zu einer von der Betätigungseinrichtung aufgebrachten Andruckkraft an die Bremsscheibe 16 drückt. Die Bremskraft der Reibungsbremse 10 wird dadurch verstärkt.

Die Rampen 22, 26 verlaufen in einem üblicherweise spitzen Rampenwinkel zur Bremsscheibe 16. Der Rampenwinkel kann sich über den Verlauf der Rampen 22, 26, d. h. in deren Längsrichtung ändern. Bei einem über die Länge der Rampen 22, 26 konstanten Rampenwinkel spricht man auch von Keilen. Die Rampen 22, 26 bilden einen Rampenmechanismus, der die Selbstverstärkung der Reibungsbremse 10 bewirkt.

Im dargestellten Ausführungsbeispiel sind drei Rampen 22 auf der Bremsbelagträgerplatte 20 und drei komplementäre Rampen 26 auf der Widerlagerplatte 24 angeordnet. Dies ergibt eine statisch bestimmte Abstützung des Reibbremsbelags 14. Eine statisch überbestimmte Abstützung mit mehr als drei Rampenpaaren 22, 26 ist denkbar. Auch weniger als drei Rampenpaare 22, 26 sind möglich, wenn sich beispielsweise zwei Rampenpaare über eine Breite oder ein Rampenpaar über einen großen Teil der Fläche der Reibbremsbelagträgerplatte 20 erstreckt (nicht dargestellt.)

In dem in Figur 1 dargestellten Ausführungsbeispiel steigen die Rampen 22, 26 nur in einer Drehrichtung 30 der Bremsscheibe 16 an, die Reibungsbremse 10 weist eine Selbstverstärkung also nur für die mit Pfeil 30 angegebene Drehrichtung der Bremsscheibe 16 auf. Bei entgegengesetzter Drehrichtung der Bremsscheibe 16 findet keine Selbstverstärkung statt. Um auch für die entgegengesetzte Drehrichtung der Bremsscheibe 16 eine Selbstverstärkung zu erzielen, können in entgegengesetzter Richtung ansteigende Rampen vorgesehen werden (nicht dargestellt). Durch unterschiedliche Rampenwinkel können verschieden große Selbstverstärkungen in den beiden Drehrichtungen der Bremsscheibe 16, also für Vor- und Rückwärtsfahrt, erreicht werden.

Nur im theoretischen Idealfall vollführen die Wälzkörper 28 ausschließlich eine Wälzbewegung auf den Rampen 22, 26. In der Praxis muss damit gerechnet werden, dass die Wälzkörper 28 beim Hin- und Herbewegen des Reibbremsbelags 14 zum Betätigen und Lösen der Reibungsbremse 10 auf den Rampen 22, 26 nicht ausschließlich wälzen, sondern auch gleiten. Dies kann mit der Zeit zu einem "Wandern" der Wälzkörper 28 führen, d. h. nach vielmaligem Hin- und Herbewegen des Reibbremsbelags 14 befinden sich die Wälzkörper 28 nicht mehr in ihrer ursprünglichen Ausgangslage am Beginn der Rampen 22, 26. Deswegen sieht die Erfindung eine Zwangssteuerung für die Wälzkörper 28 vor, für die Ausführungsbeispiele in Figuren 2 bis 6 dargestellt sind und nachfolgend erläutert werden.

Figur 2 zeigt einen Ausschnitt der Reibungsbremse 10 aus Figur 1 im Bereich eines Rampenpaares 22, 26. Zu sehen sind Bruchstücke der Bremsbelagträgerplatte 20 und der Widerlagerplatte 24. Die Rampen 22, 26 weisen an beiden Enden Endanschläge 34 auf. Die Endanschläge 34 bilden eine Zwangssteuerung für die Wälzkörper 28, sie verhindern, dass die Wälzkörper 28 die Rampen 22, 26 verlassen können.

Ein anderes Ausführungsbeispiel einer erfindungsgemäßen Zwangssteuerung zeigen Figuren 3 und 4, wobei Figur 3 eine Ansicht und Figur 4 einen Querschnitt eines der Wälzkörper 28 zeigen. Der Wälzkörper 28 weist an beiden Enden Zapfen 36 auf, auf die Zahnräder 38 drehbar aufgesetzt sind. Die Rampen 22, 26 auf der Bremsbelagträgerplatte 20 und auf der Widerlagerplatte 24 sind mit Zahnstangen 40, 42 versehen, die beiderseits der Rampen 22, 26 parallel zu den Rampen 22, 26 und mit dem gleichen Rampenwinkel wie die Rampen 22, 26 verlaufen. Die Zahnräder 38 der Wälzkörper 28 kämmen mit den Zahnstangen 40, 42. Die mit den Zahnstangen 40, 42 kämmenden Zahnräder 38 bilden eine Zwangssteuerung der Wälzkörper 28, die eine reine Wälzbewegung der Wälzkörper 28 auf den Rampen 22, 26 erzwingen und ein Gleiten verhindern.

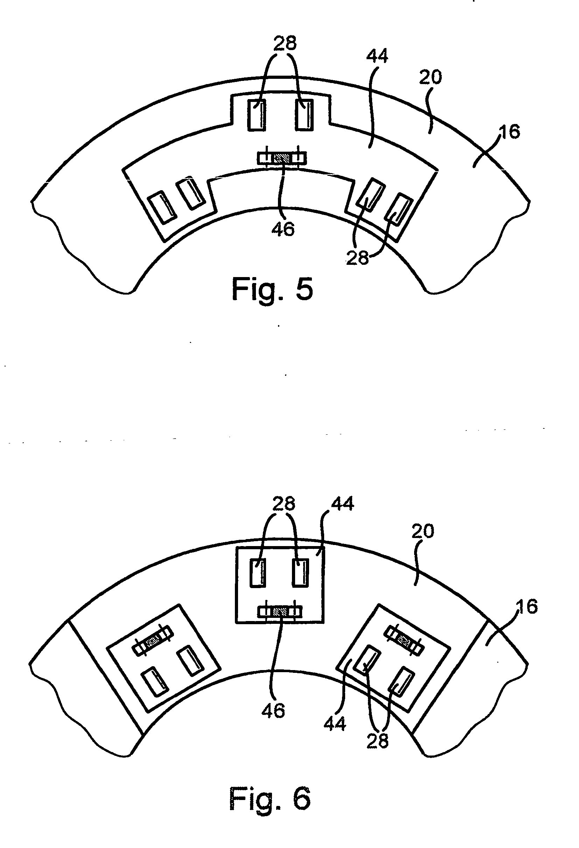

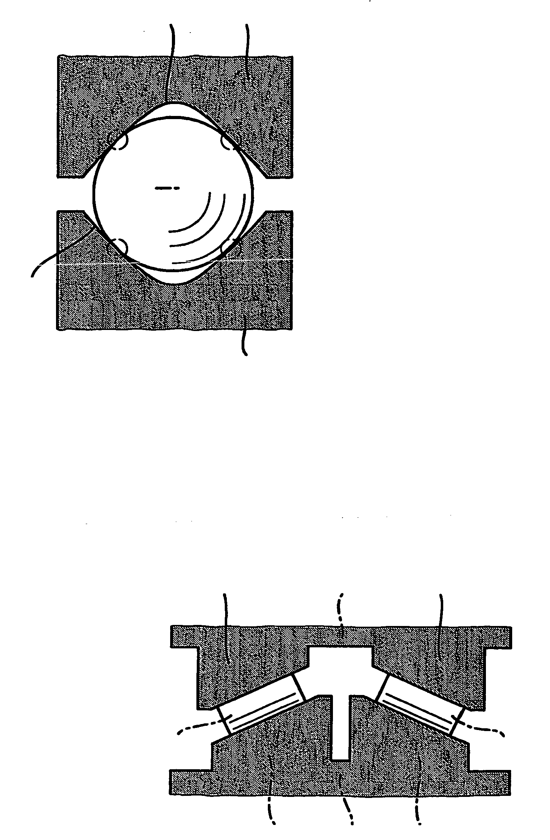

Erfindungsgemäß kann für jeden Wälzkörper 28 eine eigene Zwangssteuerung vorgesehen sein. Figuren 5 und 6 zeigen Möglichkeiten, mehrere oder alle Wälzkörper 28 zu Gruppen zusammenzufassen und dafür jeweils eine gemeinsame Zwangssteuerung vorzusehen. Figuren 5 und 6 zeigen eine Ansicht der der Bremsscheibe 16 abgewandten Rückseite der Bremsbeiagträgerplatte 20, wobei die Rampen 22 verdeckt und nicht sichtbar sind. Abweichend von Figur 1 sind in Figuren 5 und 6 jeweils zwei Wälzkörper 28 vorgesehen. In dem in Figur 5 dargestellten Ausführungsbeispiel der Erfindung weist die Reibungsbremse 10 einen Wälzkörperkäfig 44 auf. Dabei handelt es sich um ein Blechteil, das ähnlich einem Kugelkäfig eines Kugellagers ausgebildet ist und die gleiche Funktion hat, nämlich die Wälzkörper 28 in ihrem Abstand und ihrer Lage zueinander zu halten. Die Wälzkörper 28 liegen drehbar in Ausnehmungen des Wälzkörperkäfigs 44 ein, sie können sich also nur gemeinsam bewegen. Die Zwangssteuerung kann wie in Figuren 3 und 4 dargestellt an einem oder mehreren Wälzkörpern 28 erfolgen, wobei aufgrund des Wälzkörperkäfigs 44 eine Zwangssteuerung an einem Wälzkörper 28 genügt. Alternativ ist in Figur 5 ein im Wälzkörperkäfig 44 drehbar gelagertes Zahnrad 46 vorgesehen, das mit in Figur 5 nicht sichtbaren Zahnstangen wie den in Figuren 3 und 4 dargestellten Zahnstangen 40, 42 kämmt. Auch dadurch ist eine Zwangssteuerung aller Wälzkörper 28 gegeben.

In Figur 6 sind jeweils die beiden Wälzkörper 28, die auf einer Rampe 22 angeordnet sind, mit einem Wälzkörperkäfig 44 zu einer Gruppe zusammengefasst. Die Zwangssteuerung erfolgt an jedem Wälzkörperkäfig 44 wie zu Figur 5 beschrieben mit einem Zahnrad 46, das mit Zahnstangen kämmt, die den in Figuren 3 und 4 dargestellten Zahnstangen 40, 42 entsprechen. Auch hier ergibt sich eine Zwangssteuerung jedes Wälzkörpers 28, die ein Wälzen der Wälzkörper 28 auf den Rampen 22, 26 erzwingt und ein Gleiten verhindert.

Um den Reibbremsbelag 14 quer zu seiner Verschieberichtung zu führen ist es im Stand der Technik bekannt, als Wälzkörper 28 Kugeln zu verwenden, die in rinnenförmigen Kugelbahnen In der Bremsbelagträgerplatte 20 und der Widerlagerplatte 24 angebracht sind. Durch eine größere Tiefe der Kugelbahnen in ihrer Mitte und zu ihren Enden hin flacher werdende Kugelbahnen wird der Rampeneffekt erreicht. Auch mit Zylinder- oder Kegelrollen lässt sich die gewünschte Führung des Reibbremsbelags 14 quer zu seiner Verschieberichtung erreichen, wenn rampenförmige Laufbahnen erhöhte Ränder aufweisen, die die Rollen an deren Stirnseiten führen. Beide Möglichkeiten sind in der eingangs genannten WO 031056204 offenbart. Sie haben bei Verwendung von drei oder mehr Wälzkörpern 28 den Nachteil einer statischen Überbestimmtheit der Führung des beweglichen Reibbremsbelags 14 quer zu seiner Verschieberichtung also radial zu einer Drehachse der Bremsscheibe 16. Dies erfordert eine hohe Herstellungsgenauigkeit um niedrige Toleranzen zu erreichen und führt zu erhöhtem Verschleiß.

Zur Führung des beweglichen Reibbremsbelags 14 quer zu seiner Verschieberichtung weist ein Ausführungsbeispiel der Erfindung die in Figur 7 dargestellte Kugelführung mit einer Kugel als Wälzkörper 28 auf. Die Kugel 28 wälzt in Kugelrinnen 48, die in den Rampen 22, 26 der Bremsbelagträgerplatte 20 und der Widerlagerplatte 24 angebracht sind. Dabei ist die Kugellagerung als sog. Vier-Punkt-Lager ausgeführt, d. h. die Kugelrinnen 48 weisen keinen kreisförmigen Querschnitt sondern einen Querschnitt auf, bei dem die Kugel 28 in jeder Kugelrinne 48 an zwei Stellen beidseitig seitlich neben einer Längsmitte der Kugelrinnen 48 anliegt. Die Anlagestellen sind mit Kreisen 50 in Figur 7 dargestellt. Die Kugelrinnen 48 können anstelle des in Figur 7 dargestellten, gekrümmten, jedoch nicht kreisförmigen Querschnitts eine Prismenform aufweisen (nicht dargestellt.) Die Vier-Punkt-Lagerung bewirkt eine exakte Querführung des Reibbremsbelags 14 auch bei Einwirken einer Querkraft und stellt außerdem geringe Anforderungen an eine Herstellungsgenauigkeit. Um eine statische Überbestimmtheit der Führung in Querrichtung zu vermeiden weisen nur zwei der Wälzlagenrugen, beispielsweise die in Figur 1 radial inneren, an beiden Enden der Bremsbelagträgerplatte 20 angeordneten Wälzlagerungen die in Figur 7 dargestellte Vier-Punkt-Lagerung auf. Die dritte und eventuelle weitere Wälzlagerungen können beispielsweise Zylinderwalzen ohne Führung oder mit Spiel in Querrichtung sein.

Ein anderes Ausführungsbeispiel einer Quer zur Verschieberichtung des beweglichen Reibbremsbelags 14 statisch bestimmten Führung zeigt Figur 8. Figur 8 zeigt einen Schnitt durch einen radial inneren, am Ende der Bremsbelagträgerplatte 20 angeordneten und durch den radial äußeren, in der Mitte der Reibbremsbelagträgerplatte angeordneten Wälzkörper 28 aus Figur 1. Hier sind Rollen als Wälzkörper 28 verwendet, die schräg geneigt angeordnet sind. Außen angeordnete Wälzkörper 28, d. h. der in Figur 1 in der Mitte befindliche Wälzkörper 28, sind entgegengesetzt schräg geneigt wie die inneren Wälzkörper 28, um die gewünschte Führung des beweglichen Reibbremsbelags 14 quer zu seiner Verschieberichtung zu erreichen. Auch die Rampen 22, 26 weisen die Querneigung auf. Die Querneigung der Wälzkörper 28 ist verschieden um deren Beanspruchung gleich groß zu halten. Die Neigung des radial äußeren, - einzelnen Wälzkörpers 28 ist größer als die Neigung der beiden, radial inneren Wälzkörper.

## Patentansprüche

1. Selbstverstärkende elektromechanische Reibungsbremse (10), mit einem Reibbremsbelag (14), mit einer elektromechanischen Betätigungseinrichtung, mit der der Reibbremsbelag (14), zum Bremsen an Betätigungseinrichtung, mit der der Reibbremsbelag (14), zum Bremsen an einen zu bremsenden Bremskörper (16) drückbar ist, mit einem Rampenmechanismus, der in einem Winkel zum Bremskörper (16) verläuft und der den Reibbremsbelag (14) beim Drücken an den Bremskörper (16) abstützt, wobei der Reibbremsbelag (14) mit Wälzkörpern (28) am Rampenmechanismus verschiebbar gelagert ist, wobei
der Rampenmechanismus wenigstens zwei Rampen (22, 26) aufweist, wobei eine erste Rampe (22) an der vom Bremskörper (16) abgewandten Seite des Reibbremsbelags (14) vorgesehen ist und eine in Drehrichtung des Bremskörpers (16) geneigt verlaufende erste Laufbahn hat und wobei eine zweite Rampe (26) der ersten Rampe (22) gegenüberliegt, deren Laufbahn komplementär zur Laufbahn der ersten Rampe (22) geneigt ist, wobei sich die
Wälzkörper (28) auf den Laufbahnen der Rampen (22, 26) abwälzen
**dadurch gekennzeichnet, dass** die Reibungsbremse (10) eine Zwangssteuerung (34; 38, 40, 42; 44, 46) für die Wälzkörper (28) aufweist, die verhindert, dass die Wälzkörper (28) ihre Laufbahnen verlassen.

2. Reibungsbremse nach Anspruch 1, **dadurch gekennzeichnet, dass** die Zwangssteuerung (38, 40, 42; 44, 46) ein Gleiten der Wälzkörper (28) verhindert.

3. Reibungsbremse nach Anspruch 1, **dadurch gekennzeichnet, dass** die Zwangssteuerung einen Endanschlag (34) für die Wälzkörper aufweist, der den Weg der Wälzkörper (28) beschränkt.

4. Reibungsbremse nach Anspruch 1, **dadurch gekennzeichnet, dass** die Zwangssteuerung (38, 40, 42; 44, 46) die Wälzkörper (28) zwangsweise mit einer Verschiebung des Reibbremsbelags (14) bewegt

5. Reibungsbremse nach Anspruch 4, **dadurch gekennzeichnet, dass** die Zwangssteuerung ein mit einer Zahnstange (40, 42) kämmendes Zahnrad (38; 46) aufweist, wobei das Zahnrad (38; 46) mit einem Wälzkörper (28) und die Zahnstange (40, 42) mit dem Reibbremsbelag (14) verbunden oder feststehend ist.

6. Reibungsbremse nach Anspruch 5, **dadurch gekennzeichnet, dass** die Zwangssteuerung ein mit zwei Zahnstangen (40, 42) kämmendes Zahnrad (38; 46) aufweist, wobei eine Zahnstange (40, 42) mit dem Reibbremsbelag (14) verbunden und die andere feststehend ist.

7. Reibungsbremse nach Anspruch 1, **dadurch gekennzeichnet, dass** die Wälzkörper (28) oder eine Gruppe von Wälzkörpern (28) durch einen Wälzkörperkäfig (44) miteinander verbunden sind, der die Wälzkörper (28) in ihrem Abstand voneinander und in ihrer Lage zueinander hält.

8. Reibungsbremse nach Anspruch 7, **dadurch gekennzeichnet, dass** die Zwangssteuerung (46) am Wälzkörperkäflg (44) angreift.

9. Reibungsbremse nach Anspruch 1, **dadurch gekennzeichnet, dass** mindestens ein Wälzkörper (28) den Reibbremsbelag (14) quer zu seiner Verschieberichtung statisch bestimmt führt.

10. Reibungsbremse nach Anspruch 9, **dadurch gekennzeichnet, dass** zwei Wälzkörper (28) den Reibbremsbelag (14) quer zu seiner Verschieberichtung statisch bestimmt führen und dass weitere Wälzkörper (28) den Reibbremsbelag (14) nicht quer zu seiner Verschieberichtung führen.

11. Reibungsbremse nach Anspruch 9, **dadurch gekennzeichnet, dass** der Wälzkörper (28) eine Kugel ist, die in zwei einander gegenüber liegenden Kugelrinnen (48) geführt ist und die in jeder Kugelrinne (48) an zwei Punkten (50) beidseitig einer gedachten tiefsten Linie der Kugelrinnen (48) anliegt.

12. Reibungsbremse nach Anspruch 9, **dadurch gekennzeichnet, dass** der Wälzkörper (28) eine Rolle ist, die mit einer Neigung quer zu einer Verschieberichtung des Reibbremsbelags (14) angeordnet ist.

13. Reibungsbremse nach Anspruch 12, **dadurch gekennzeichnet, dass** die Reibungsbremse (10) mindestens zwei Rollen als Wälzkörper (28) aufweist, deren Neigungen einander entgegengesetzt sind.

14. Reibungsbremse nach Anspruch 13, **dadurch gekennzeichnet, dass** die Reibungsbremse (10) drei Rollen als Wälzkörper (28) aufweist, die an Ecken eines gedachten Dreiecks angeordnet sind, wobei die Neigungen radial innerer Rollen den Neigungen radial äußerer Rollen entgegengesetzt sind.

15. Reibungsbremse nach Anspruch 1, **dadurch gekennzeichnet, dass** die Reibungsbremse (10) eine Teilbelagscheibenbremse ist.

## Claims

1. Self-boosting electromechanical friction brake (10), having a friction brake lining (14) with an electromechanical activation device with which the friction brake lining (14) can, for the purpose of braking, be pressed against a brake body (16) to be braked, having a ramp mechanism which extends at an angle to the brake body (16) and which supports the friction brake lining (14) when it is pressed against the brake body (16), wherein the friction brake lining (14) is displaceably mounted with roller bodies (28) on the ramp mechanism, wherein the ramp mechanism has at least two ramps (22, 26), wherein the first ramp (22) is provided on the side of the friction brake lining (14) facing away from the brake body (16) and has a first raceway which runs at an incline in the rotational direction of the brake body (16), and wherein a second ramp (26) lies opposite the first ramp (22) whose raceway is inclined in a way which is complementary to the raceway of the first ramp (22), wherein the roller bodies (28) roll on the raceways of the ramps (22, 26), **characterized in that** the friction brake (10) has a positive controller (34; 38, 40, 42; 44, 46) for the roller bodies (28) which prevents the roller bodies (28) from leaving their raceways.

2. Friction brake according to Claim 1, **characterized in that** the positive controller (38, 40, 42; 44, 46) prevents the roller bodies (28) from sliding.

3. Friction brake according to Claim 1, **characterized in that** the positive controller has an end stop (34) for the roller bodies, which end stop (34) limits the travel of the roller bodies (28).

4. Friction brake according to Claim 1, **characterized in that** the positive controller (38, 40, 42; 44, 46) positively moves the roller bodies (28) with a displacement of the friction brake lining (14).

5. Friction brake according to Claim 4, **characterized in that** the positive controller has a gear wheel (38; 46) which intermeshes with a toothed rack (40, 42), wherein the gear wheel (38; 46) is connected to a roller body (28) and the toothed rack (40, 42) is connected to the friction lining (14) or is fixed.

6. Friction brake according to Claim 5, **characterized in that** the positive controller has a gear wheel (38; 46) which intermeshes with two toothed racks (40, 42), wherein one toothed rack (40, 42) is connected to the friction brake lining (14) and the other is fixed.

7. Friction brake according to Claim 1, **characterized in that** the roller bodies (28) or a group of roller bodies (28) are connected to one another by a roller body cage (44) which holds the roller bodies (28) at a distance from one another and in their position with respect to one another.

8. Friction brake according to Claim 7, **characterized in that** the positive controller (46) acts on the roller body cage (44).

9. Friction brake according to Claim 1, **characterized in that** at least one roller body (28) guides the friction brake lining (14) transversely with respect to its displacement direction in a statically specific fashion.

10. Friction brake according to Claim 9, **characterized in that** two roller bodies (28) guide the friction brake lining (14) transversely with respect to its displacement direction in a statically specific fashion, and **in that** further roller bodies (28) do not guide the friction brake lining (14) transversely with respect to its displacement direction.

11. Friction brake according to Claim 9, **characterized in that** the roller body (28) is a ball which is guided in two ball grooves (48) which lie opposite one another, and said ball bears in each ball groove (48) against two points (50) on each side of a virtual lowest line of the ball grooves (48).

12. Friction brake according to Claim 9, **characterized in that** the roller body (28) is a roller which is arranged with an incline transversely with respect to a displacement direction of the friction brake lining (14).

13. Friction brake according to Claim 12, **characterized in that** the friction brake (10) has at least two rollers as roller bodies (28) whose inclines are opposed to one another.

14. Friction brake according to Claim 13, **characterized in that** the friction brake (10) has three rollers as roller bodies (28) which are arranged at corners of a virtual triangle, wherein the inclines of radially inner rollers are opposed to the inclines of radially outer rollers.

15. Friction brake according to Claim 1, **characterized in that** the friction brake (10) is a partially lined disc brake.

## Revendications

1. Frein à friction (10) électromécanique, auto-amplifié comportant une garniture de friction (14), une installation d'actionnement électromécanique, qui pousse la garniture de friction (14) contre l'organe de frein (16) à freiner, un mécanisme à rampe qui fait un angle par rapport à l'organe de frein (16) et qui soutient la garniture de friction (14) lors de la poussée contre l'organe de frein (16),
la garniture de friction (14) étant montée coulissante sur le mécanisme à rampe par des organes de roulement (28),
le mécanisme à rampe comporte au moins deux rampes (22, 26),
une première rampe (22) prévue sur le côté de la garniture de friction (14) à l'opposé de celle de l'organe de frein (16), possède un premier chemin de circulation incliné dans la direction de rotation de l'organe de frein (16) et une seconde rampe (26) prévue en face de la première rampe (22) a un chemin de circulation incliné de façon complémentaire à celui de la première rampe (22),
les organes de roulement (28) roulant sur les chemins de circulation des rampes (22, 26),
**caractérisé en ce que**
le frein à friction (10) comporte une commande forcée (34 ; 38, 40, 42 ; 44, 46) pour les organes de roulement (28) évitant qu'ils ne quittent leur chemin de roulement.

2. Frein à friction selon la revendication 1,
**caractérisé en ce que**
la commande forcée (34 ; 38, 40, 42 ; 44, 46) évite que les organes de roulement (28) ne glissent.

3. Frein à friction selon la revendication 1,
**caractérisé en ce que**
la commande forcée comporte une butée de fin de course (34) pour l'organe de roulement qui limite la course des organes de roulement (28).

4. Frein à friction selon la revendication 1,
**caractérisé en ce que**
la commande forcée (38, 40, 42 ; 44, 46) déplace les organes de roulement (28) de manière forcée avec un coulissement de la garniture de fiction (14).

5. Frein à friction selon la revendication 4,
**caractérisé en ce que**
la commande forcée comporte un pignon denté (38 ; 46) engrenant avec une crémaillère (40, 42), le pignon denté (38 ; 46) étant fixe ou relié à un organe de roulement (28) et la crémaillère (40, 42) est fixe ou est reliée à la garniture de friction (14).

6. Frein à friction selon la revendication 5,
**caractérisé en ce que**
la commande forcée comporte un pignon denté (38 ; 46) engrenant avec deux crémaillères (40, 42), dont une crémaillère (40, 42) est reliée à la garniture de friction (14) et l'autre est fixe.

7. Frein à friction selon la revendication 1,
**caractérisé en ce que**
les organes de roulement (28) ou un groupe d'organes de roulement (28) sont reliés par une cage d'organes de roulement (44) qui maintient les organes de roulement (28) écartés et dans leur position respective.

8. Frein à friction selon la revendication 7,
**caractérisé en ce que**
la commande forcée (46) agit sur la cage (44) des organes de roulement.

9. Frein à friction selon la revendication 1,
**caractérisé en ce qu'**
au moins un organe de roulement (28) guide la garniture de friction (14) de façon définie statistiquement, transversalement à sa direction de coulissement.

10. Frein à friction selon la revendication 9,
**caractérisé par**
deux organes de roulement (28) qui guident de manière déterminée statistiquement la garniture de friction (14) transversalement à sa direction de coulissement et d'autres organes de roulement (28) ne guident pas la garniture de friction (14) transversalement à sa direction de coulissement.

11. Frein à friction selon la revendication 9,
**caractérisé en ce que**
l'organe de roulement (28) est une bille guidée dans deux gorges à bille (48) qui se font face et s'appliquant en deux points (50) de chaque gorge à bille (48), des deux côtés de la ligne géométrique la plus profonde des gorges à bille (48).

12. Frein à friction selon la revendication 9,
**caractérisé en ce que**
l'organe de roulement (28) est un galet incliné transversalement par rapport à la direction de coulissement de la garniture de friction (14).

13. Frein à friction selon la revendication 12,
**caractérisé en ce que**
le frein à friction (10) comporte au moins deux galets comme organes de roulement (28) et qui sont inclinés l'un par rapport à l'autre.

14. Frein à friction selon la revendication 13,
**caractérisé en ce que**
le frein à friction (10) comporte trois galets comme organes de roulement (28) situés au coin d'un triangle et l'inclinaison radiale des galets intérieurs est opposée à l'inclinaison radiale des galets extérieurs.

15. Frein à friction selon la revendication 1,
**caractérisé en ce que**
le frein à friction (10) fait partie d'un frein à disque à garniture partielle.
